# FASCICULE DE BREVET EUROPEEN

(11) **EP 2 938 671 B1**
(45) Date de publication et mention de la délivrance du brevet: **10.03.2021**
(21) Numéro de dépôt: 13824623.6
(22) Date de dépôt: 23.12.2013
(51) Int. Cl.: C08L 23/16, C08L 51/06, C08L 51/04

(54) **COMPOSITION ELASTOMERE AUTOADHERENTE**
SELBSTHAFTENDE ELASTOMERZUSAMMENSETZUNG
AUTO-ADHESIVE ELASTOMER COMPOSITION

(30) Priorité: 26.12.2012 FR 1203594
(43) Date de publication de la demande: 04.11.2015
(73) Titulaire: ARIANEGROUP SAS, 75015 Paris (FR)
(72) Inventeur: GARCIA, Christine, F-33185 Le Haillan (FR); AYMONIER, Agnès, F-33130 Begles (FR); REY, Jacques, F-33700 Merignac (FR); ROUSSEAU, Gérald, F-31400 Toulouse (FR); SOUM, Alain, F-33170 Gradignan (FR)
(74) Mandataire: Cabinet Beau de Loménie
(86) Numéro de dépôt international: PCT/FR2013/053251
(87) Numéro de publication internationale: WO 2014/102500

(56) Documents cités:
- EP-A1- 0 603 580
- EP-A1- 0 964 030
- WO-A1-86/07600
- WO-A1-97/44390
- WO-A1-2005/111143
- WO-A2-2011/159059
- US-A1- 2012 006 482

## Description

La présente invention concerne l'adhésion spontanée d'une protection thermique en élastomère réticulé avec un matériau composite.

À l'heure actuelle, un primaire d'adhérence est nécessaire afin de réaliser cet assemblage. Or comme nombres de primaires d'adhérence, le primaire d'adhérence utilisé pour cet assemblage :
a. est constitué en grande partie de solvants, avec la présence notamment de solvants posant des problèmes au niveau H&S suite à la mise en place de la réglementation REACH et entraînant ainsi un risque potentiel de pérennité du fait de son caractère nocif ;
b. nécessite une cuisson préalable avant accostage du substrat composite ;
c. n'a pas de remplaçant identifié.

Afin de s'affranchir de ces limitations et favoriser l'aptitude au collage de l'élastomère réticulé sur le composite sans recours à des primaires d'adhérence, les inventeurs ont découvert qu'il était possible de fonctionnaliser la surface de l'élastomère réticulé de façon à le rendre auto-adhérent à un matériau composite. Cette fonctionnalisation consiste à modifier la composition élastomère par introduction de molécules amphiphiles capables d'établir par migration de la masse vers la surface, lors de la réticulation de la composition élastomère, des connections physico-chimiques et/ou chimiques entre la composition élastomère réticulée et le composite.

Ce concept permet, en plus de la levée des risques H&S, une diminution des coûts (suppression de l'étape d'enduction et de cuisson du primaire d'adhérence) et une fiabilisation de l'assemblage.

La présente invention concerne donc une composition élastomère réticulable comprenant un mélange
- (a) d'une composition élastomère à base d'un élastomère terpolymère éthylène-propylène-diène et
- (b) entre 2 et 14% en masse par rapport à la masse totale de la composition d'un copolymère amphiphile statistique d'un polymère hydrocarboné saturé ou insaturé en C2-C4 fonctionnalisé par un groupement fonctionnel polaire comprenant un groupement anhydride maléique.

L'élastomère terpolymère éthylène-propylène-diène (a) selon la présente invention, dénommé EPDM dans le reste de la demande, est un élastomère bien connu de l'homme du métier. Ce terpolymère amorphe est obtenu en copolymérisant dans des proportions variables l'éthylène et le propylène avec un faible taux de diène. La polymérisation n'utilise qu'une double liaison du diène. La seconde, latérale à la chaîne moléculaire, rend l'élastomère réticulable, par exemple par réticulation conventionnelle au soufre ou aux peroxydes.

Avantageusement l'EPDM (a) selon la présente invention comprend par rapport à la masse total du terpolymère entre 60 et 85 % en masse d'éthylène, encore plus avantageusement entre 60 et 80 % en masse, et entre 2 et 12 % en masse du diène, avantageusement entre 2,5 et 12 % en masse, le reste étant constitué par du propylène. La proportion de chacun des monomères agit sur les propriétés de l'EPDM.

Dans un mode de réalisation avantageux, le diène n'est pas conjugué de façon à éviter les réactions secondaires ou de formation de gel. Avantageusement il est choisi parmi le dicyclopentadiène, l'éthylidène norbornène et le vinyle norbornène. Encore plus avantageusement il s'agit de l'éthylidène norbornène. L'EPDM est disponible dans le commerce, par exemple chez la société Exxon Mobil Chemical.

Au sens de la présente invention on entend par « copolymère amphiphile » un copolymère présentant à la fois une partie polaire et une partie apolaire. La partie apolaire lui permet d'être compatible chimiquement et/ou physiquement avec l'élastomère EPDM (a). La partie polaire comporte des groupements chimiques fonctionnels polaires comprenant un groupement anhydride maléique capables d'interagir chimiquement et/ou physiquement avec la résine du composite qui sera mise en contact avec la composition élastomère réticulée selon la présente invention, de façon à assurer l'auto adhérence par la création de liaisons de préférence chimiques covalentes.

Le copolymère amphiphile (b) selon l'invention doit en plus posséder suffisamment de mobilité de façon à pouvoir migrer de la masse vers la surface de la composition élastomère selon la présente invention lors de sa réticulation. Pour cela, les chaînes copolymères doivent posséder une masse molaire présentant le meilleur compromis entre migration des groupements fonctionnels (polaires) du copolymère vers la surface de la composition élastomère, et enchevêtrement voire réaction de la partie apolaire du copolymère avec la composition élastomère, lors de la réticulation de la composition élastomère selon la présente invention.

Il doit en outre être stable à la température de réticulation de la composition élastomère et du composite selon la présente invention, c'est-à-dire en général à une température comprise entre 110 et 160 °C et avantageusement pendant une durée comprise entre 60 et 300 minutes. On entend par « stabilité à la température de réticulation» dans le sens de la présente invention, le maintien de la présence des groupements chimiques anhydride maléique capables de réagir avec la résine composite après un cycle compris entre 60 et 300 min à la température de réticulation comprise entre 110 °C et 160 °C et le maintien de la masse du copolymère (avantageusement sa perte en masse est inférieure à 5 % par rapport à la masse totale du copolymère (b) durant ce cycle).

Pour assurer l'incorporation du copolymère dans les mélanges lors de la fabrication de la composition élastomère selon la présente invention, le copolymère (b) selon la présente invention doit avoir une température de transition vitreuse inférieure à la température de mélange de la composition ; de même, dans le cas d'un copolymère présentant une phase cristalline, sa température de fusion doit être la plus proche possible de la température de mélangeage, avantageusement entre 40 et 60 °C, et plus avantageusement elle est de 50 °C

Dans ces conditions, la mobilité du copolymère est favorisée lors de la montée en température jusqu'à la réticulation de la composition élastomère selon la présente invention.

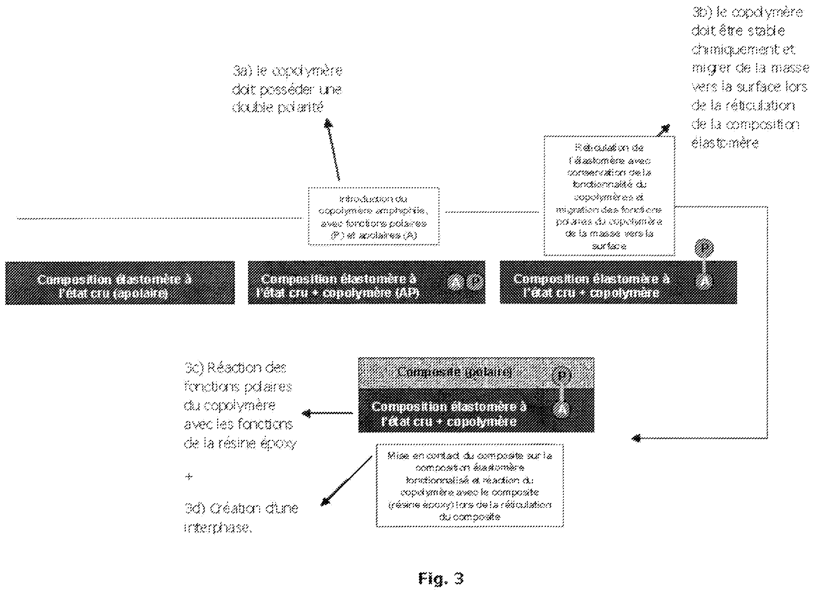

Ainsi le copolymère amphiphile ajouté à la composition élastomère doit (cf. figure 3) :
- posséder une double polarité (polaire et apolaire [P,A]) compatible chimiquement ou physiquement avec la résine (polaire) et l'élastomère (apolaire) (Figure 3a),
- être stable chimiquement et migrer de la masse vers la surface, lors de l'étape de réticulation pour apporter en surface les espèces réactives (polaires) vis-à-vis de la résine (Figure 3b),
- établir les liaisons physiques ou chimiques avec la résine du composite lors du bobinage (Figure 3c),
- générer des phénomènes d'interdiffusion des chaînes élastomère/composite favorisant l'adhésion (Figure 3d).

Le copolymère amphiphile (b) selon l'invention est statistique c'est-à-dire que la répartition des fonctions polaires (P) et apolaires (A) est: (AAPPPAAPAPPAPAAA...).

Dans le copolymère amphiphile (b) selon la présente invention, le polymère hydrocarboné saturé ou insaturé en C2-C4 sert de squelette apolaire compatible avec l'élastomère (a).

Le polymère hydrocarboné saturé ou insaturé en C2-C4 est choisi parmi le polyéthylène, le polyéthylène-polypropylène (PE-PP) et le polybutadiène.

Au sens de la présente invention on entend par « copolymère amphiphile fonctionnalisé par un groupement fonctionnel polaire comprenant un groupement anhydride maléique », tout copolymère obtenu par fonctionnalisation ou greffage d'une fonction polaire comprenant un groupement anhydride maléique. Le copolymère ainsi avantageusement a la formule (I) suivante : 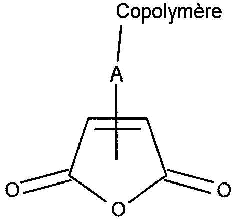 dans laquelle A représente une liaison ou une partie du groupement fonctionnel. Avantageusement il s'agit d'un copolymère obtenu par greffage d'un groupement fonctionnel polaire comprenant un groupement anhydride maléique, c'est-à-dire avantageusement par réaction entre le polymère hydrocarboné et le groupe fonctionnel comprenant de l'anhydride maléique.

Avantageusement, le groupement fonctionnel polaire du copolymère amphiphile (b) est l'anhydride maléique. Dans ce cas on parle de copolymère amphiphile fonctionnalisé par un groupement anhydride maléique et avantageusement A représente une liaison. Il s'agit en particulier d'un copolymère greffé par un anhydride maléique, c'est-à-dire avantageusement par réaction entre le polymère hydrocarboné et l'anhydride maléique. De tels copolymères sont bien connus de l'homme du métier et sont par exemple décrits dans le brevet US 5 300 569. Ils sont aussi disponibles commercialement par exemple chez la société Cray Valley sous la dénomination RICON® 130 MA, en particulier RICON® 130 MA8 ou RICON 131 MA20 ou encore chez la société Aldrich sous le numéro 456632. La teneur en anhydride maléique du copolymère selon la présente invention est très variable et est comprise entre 2 et 40 % en masse, avantageusement entre 2 et 20 % en masse, en particulier entre 2 et 10% en masse, par rapport à la masse totale du copolymère. En effet au-delà de 40% en masse, avantageusement au-delà de 20 % en masse, il y a un risque d'instabilité thermique du copolymère.

Dans un mode de réalisation particulier de l'invention, la composition élastomère réticulable selon la présente invention comprend par rapport à la masse totale de la composition entre 2 et 10%, en particulier entre 3 et 10%, avantageusement environ 5% en masse. En effet il faut suffisamment de copolymère pour qu'il y ait suffisamment de groupements fonctionnels polaires en surface de la composition élastomère réticulée pour qu'ils puissent réagir avec la résine des matériaux composites. Les inventeurs se sont également aperçus que plus la quantité de copolymère était importante, plus les propriétés mécaniques de la composition réticulée diminuaient, en particulier sa contrainte à la rupture. Ainsi pour une teneur supérieure à 14 % en poids, la contrainte à la rupture devient trop mauvaise pour être utilisable sur une structure en matériau composite, par exemple en tant que protection thermique et/ou étanchéité interne d'un matériau composite et/ou pour accommoder les déformations mécaniques de ce matériau composite.

Dans un autre mode de réalisation de l'invention, la composition élastomère réticulable selon la présente invention comprend une charge, éventuellement un plastifiant, et un système de réticulation, avantageusement constitué par des peroxydes.

La charge permet de renforcer la composition élastomère selon la présente invention. Il peut s'agir de silice, de noir de carbone ou de leur mélange.

Le plastifiant peut améliorer la mise en oeuvre et la tenue à froid de la composition élastomère selon la présente invention. Il peut s'agir d'aromatiques ou d'esters.

Le système de réticulation permet lors de la réticulation de la composition selon la présente invention de créer un réseau tridimensionnel par pontage des chaînes de l'élastomère EPDM (a) ce qui apporte une tenue mécanique à la composition élastomère selon la présente invention. Il peut s'agir de soufre ou de peroxydes. Avantageusement il s'agit de peroxydes.

La composition selon la présente invention peut également contenir des protecteurs pour protéger du vieillissement ou de la lumière la composition élastomère selon la présente invention. Il peut s'agir de dérivés amines ou de dérivés phénoliques.

Enfin la composition élastomère selon la présente invention peut contenir divers autres ingrédients bien connus de l'homme du métier pour des applications ou des mises en œuvre spécifiques tels que des résines tackifiantes ou des ignifugeants.

La présente invention concerne en outre le procédé de préparation de la composition élastomère réticulable selon la présente invention caractérisé en ce qu'il comprend l'étape d'incorporation du copolymère amphiphile (b) dans la composition élastomère (a). L'étape d'incorporation se fait avantageusement à une température comprise entre 40 et 60°C, en particulier à 50°C.

Avantageusement on incorpore le copolymère amphiphile (b) après incorporation des autres composants de la composition élastomère selon la présente invention, de façon avantageuse avec un mélangeur interne ou mélangeur ouvert.

Avantageusement l'incorporation se fait à l'aide d'un mélangeur ouvert.

La présente invention concerne de plus une composition élastomère réticulée, obtenue par réticulation, avantageusement à l'aide de peroxydes, de la composition élastomère réticulable selon la présente invention.

La présente invention concerne en outre le procédé de fabrication de la composition élastomère réticulée selon la présente invention caractérisé en ce qu'il comprend l'étape de réticulation de la composition élastomère réticulable selon la présente invention à l'aide d'un système de réticulation, avantageusement à une température comprise entre 110 °C et 160 °C, encore plus avantageusement sous pression et sous vide. Dans un mode de réalisation particulier, le procédé selon la présente invention comprend une étape préalable à l'étape de réticulation de mise en contact de la composition élastomère selon la présente invention avec des films ou tissus de mise en œuvre polaires ou apolaires, avantageusement polaires. Avantageusement, les étapes de mise en contact des films ou tissus de mise en œuvre et de réticulation sont simultanées.

Avantageusement l'étape de réticulation dure entre 60 et 300 minutes et se passe sous vide et sous pression.

La présente invention concerne en outre l'utilisation de la composition élastomère réticulée selon la présente invention en tant que protection thermique et/ ou étanchéité interne d'un matériau composite et/ou pour accommoder les déformations mécaniques de ce matériau composite. Ainsi tout en adhérant directement sur le composite sans recours à l'utilisation de primaire d'adhérence, la composition élastomère réticulée selon la présente invention peut revêtir un matériau composite afin de le protéger contre des hautes températures (de part sa faible diffusivité et sa résistance à l'érosion) et/ou d'assurer l'étanchéité interne dudit composite et/ou accommoder les déformations mécaniques avec une bonne tenue au vieillissement.

La présente invention concerne de plus un assemblage comprenant :
- (A) une structure en matériau composite,
- (B) une couche de revêtement en composition élastomère réticulée selon la présente invention.

Avantageusement l'épaisseur de cette couche de revêtement est d'au moins 1 mm, en particulier comprise entre 1 mm et 200 mm.

Un matériau composite est composé de différentes phases appelées matrice et renfort. Le matériau composite possède des propriétés que les éléments seuls ne possèdent pas. La matrice assure la cohésion entre les renforts afin de répartir les sollicitations mécaniques. Les renforts utilisés assurent les propriétés mécaniques des composites.

Les matériaux composites apportent de meilleures propriétés qu'une structure métallique. Ils permettent un gain de masse et ils tiennent à plus haute pression pour une plus faible épaisseur de composite.

Avantageusement, la matrice du matériau composite (A) est choisie parmi les résines époxy, phénoliques ou bismaléimides. De façon avantageuse il s'agit de résine époxy. De façon encore plus avantageuse la résine est en éther diglycidyle de bisphénol A.

Avantageusement le renfort est en fibres de kevlar, de verre ou de carbone, de façon encore plus avantageuse en fibres de carbone car elles possèdent une meilleure résistance mécanique.

Ainsi avantageusement, la matrice du matériau composite (A) est une résine époxy et le renfort est en fibres de carbone.

Dans un mode de réalisation particulier de l'invention la matrice du matériau composite comprend avant sa réticulation un agent réticulant. Avantageusement cet agent réticulant consiste dans le cas des résines époxy, en un monomère polyamine tel que par exemple le triéthylènetétramine, un amide, des agents réticulant cycloaliphatiques, imidazoles, des agents polymercaptan, des amines aromatiques ou aliphatiques ainsi que des anhydrides d'acide. Avantageusement il s'agit d'une amine aromatique, en particulier le diéthyltoluènediamine (DETDA). La fabrication de structure en matériaux composites est bien connue de l'homme du métier.

Ainsi avantageusement l'assemblage selon la présente invention ne comprend pas d'adhésif ou de primaire d'adhérence entre la structure en matériau composite (A) et la couche de revêtement en composition élastomère (B). Ainsi la couche de revêtement en composition élastomère réticulée selon la présente invention peut être directement appliquée sur la structure en matériau composite.

La présente invention concerne en outre le procédé de fabrication de l'assemblage selon la présente invention caractérisé en ce qu'il comprend les étapes successives suivantes :
a) préparation de la composition élastomère réticulable selon la présente invention, avantageusement à l'aide du procédé selon la présente invention ;
b) réticulation de la composition élastomère selon la présente invention obtenue à l'étape a), avantageusement à l'aide du procédé selon la présente invention ;
c) mise en contact d'un matériau composite avec la composition élastomère réticulée obtenue à l'étape b) ;
d) réticulation de la résine du matériau composite à l'aide d'un cycle thermique approprié afin de permettre l'adhésion spontanée entre la composition élastomère réticulée et la résine du matériau composite, avantageusement à une température comprise entre 70 et 130 °C.

Lors de la réticulation de la résine du matériau composite, les groupements fonctionnels polaires comprenant un groupement anhydride maléique présents à la surface de la composition élastomère réticulée selon la présente invention doivent interagir avec cette résine, avantageusement de façon à former des liaisons covalentes.

En particulier lorsque la résine est une résine époxy, et que le groupement fonctionnel est un anhydride maléique, la réaction a lieu en deux étapes : D'abord dans une étape d'initiation, le groupement anhydride maléique du copolymère doit réagir avec un groupe R1-OH selon la réaction suivante :

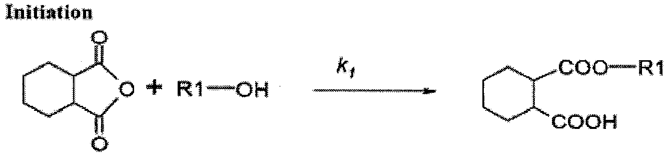

R1 représente un groupe alkyle en C1-C6 ou un atome d'hydrogène.

Si aucun alcool n'est utilisé dans la fabrication du composite, cette étape d'initiation a lieu grâce à la présence d'eau (humidité du milieu).

Il y a ensuite une réaction d'estérification entre l'anhydride maléique du copolymère dont la chaîne a été ouverte et l'époxyde de la résine selon le schéma réactionnel suivant : 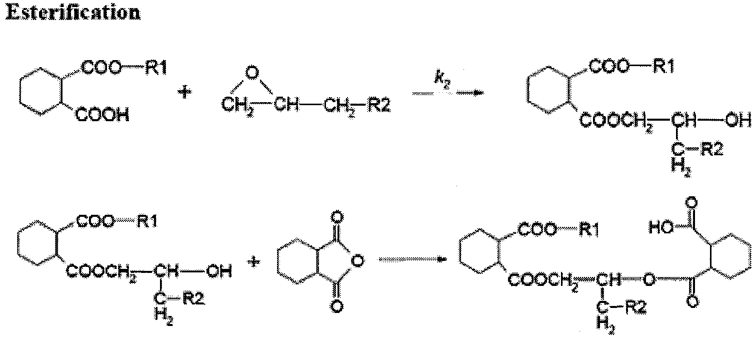 dans lequel R2 représente le reste de la résine.

Dans le cas où la résine est une résine époxy, avantageusement le cycle thermique approprié est compris entre 6 et 30 heures à des températures comprises entre 70 et 130 °C.

Enfin la présente invention concerne l'utilisation de l'assemblage selon la présente invention dans les domaines de l'aéronautique ou de l'aérospatial avantageusement dans les systèmes de propulsion.

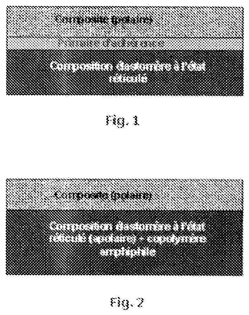

L'invention sera mieux comprise à la lumière des figures et des exemples qui suivent
La figure 1 représente le système actuel de collage avec un primaire d'adhérence entre une résine époxy et un élastomère réticulé de protection thermique.
La figure 2 représente l'assemblage final entre (A) et (B) selon la présente invention.
La figure 3 représente le schéma du procédé de fabrication de l'assemblage final entre (A) et (B) selon la présente invention.

### Exemple 1 sélection des copolymères avant incorporation dans la composition élastomère

Les différents copolymères testés sont rassemblés dans le tableau 1 suivant:

**Tableau 1 : liste des copolymères testés**

| **Caractéristique** | **Possibilités d'interactions physiques avec la résine** | **Possibilité d'interactions chimiques avec la résine** | **Possibilité d'interaction physique avec l'élastomère** | **Possibilité d'interaction chimique avec l'élastomère** | **Compatibilité élastomère** |
|---|---|---|---|---|---|
| Polybutadiène / anhydride maléique (8%) (RICON® 130 MA8 de Cray Valley) | oui | oui | oui | oui | oui |
| Polybutadiène / anhydride maléique (20%) RICON® 131 MA20 de Cray Valley) | oui | oui | oui | oui | oui |
| Polyéthylène / anhydride maléique (3-3,5%) (456632 d'Aldrich) | oui | oui | oui | non | oui |
| Polyéthylène / polyoxyde d'éthylène (50 %) (458961 d'Aldrich) | oui | non | oui | non | oui |

Tous les copolymères sont des copolymères statistiques excepté le Polyéthylène/Polyoxyde d'éthylène (PE/POE) qui est un copolymère à bloc. Avant de sélectionner les copolymères pour la réalisation des formulations, une étude des copolymères seuls a été mise en œuvre pour étudier leur comportement thermique. Il est en effet nécessaire que les copolymères sélectionnés soient stables entre 110 °C et 160 °C, température de réticulation de l'élastomère EPDM (a) et du composite utilisé dans le cadre des exemples.

Tous les copolymères présentent les mêmes caractéristiques :
o une température de transition vitreuse (Tg) inférieure à 20°C. Leur mise en œuvre sera donc facilitée dans les mélanges lors de la fabrication et ils gagneront en mobilité lors de la montée en température jusqu'à la réticulation.
o une stabilité thermique à 160°C : ils perdent en moyenne moins de 2% de leur masse. Cette perte de masse est attribuée à la présence d'humidité.
o les groupements fonctionnels polaires recherchés sont toujours présents après 100min à 160°C.

### Exemple 2 : évaluation des copolymères utilisés pour la préparation de compositions élastomères réticulées selon la présente invention

Les copolymères sélectionnés à l'exemple 1 ont été incorporés dans une composition élastomère en une teneur comprise entre 5 et 14 % en masse par rapport à la masse totale de la composition élastomère selon l'invention pour vérifier l'influence de la quantité de copolymère.

Le procédé de fabrication de la composition élastomère a été mis en œuvre à l'aide d'un mélangeur ouvert et chaque copolymère a été introduit dans la composition élastomère selon l'invention dans la teneur de 5 à 14 % en masse. Les mélanges réalisés sont rassemblés dans le tableau 2 ci-après :

**Tableau 2 : liste des mélanges réalisés**

| **Produit incorporé** | **% en masse théorique dans le mélange** | **Exemple** |
|---|---|---|
| Aucun (témoin) | 0 | Comparatif 1 (C1) |
| Polybutadiène / anhydride maléique (8%) | 5 | Exemple 1 |
| Polybutadiène / anhydride maléique (8%) | 10 | Exemple 2 |
| Polybutadiène / anhydride maléique (20%) | 5 | Exemple 3 |
| Polyéthylène / anhydride maléique (3-3,5%) | 5 | Exemple 4 |
| Polyéthylène / anhydride maléique (3-3,5%) | 10 | Exemple 5 |
| Polybutadiène / anhydride maléique (20%) | 10 | Exemple 6 |
| Polyéthylène / polyoxyde d'éthylène (50%) | 5 | Comparatif 2 (C2) |
| Polyéthylène / polyoxyde d'éthylène (50%) | 10 | Comparatif 3 (C3) |
| Polyéthylène / polyoxyde d'éthylène (50%) | 14 | Comparatif 4 (C4) |

Ces mélanges d'élastomères sont ensuite préparés avec les différents films et tissus de mise en œuvre pour une réticulation sous pression et sous vide selon le cycle 100 minutes à 160 °C.

Afin d'évaluer sommairement les propriétés de surface et de volume de ces nouvelles formulations, les caractérisations suivantes ont été réalisées :
∘ **Caractérisation de surface**
   ▪ Des analyses infrarouge (ART-IRTF) avant cuisson de l'élastomère (vérification de la stabilité des fonctions après mélangeage) et après cuisson à 160 °C pendant 100 minutes (pour évaluer si en surface, les fonctions réactives ont migré afin de pouvoir réagir avec les fonctions époxy de la résine). La fenêtre de transmission du spectre était de 4000 à 500 cm⁻¹.
   ▪ Des mesures d'énergie de surface selon la méthode de la goutte sessile (méthode simple qui permet de connaître la capacité d'un matériau à être mouillé par un liquide). Une énergie de surface élevée est une condition nécessaire (mais pas suffisante) pour effectuer un bon collage. Il est nécessaire que l'énergie de la surface à coller soit au moins équivalente à celle du primaire d'adhérence. Dans notre cas pour assurer l'auto-adhésion entre l'élastomère et le composite, l'objectif à atteindre est une augmentation de l'énergie de surface de la composition élastomère de la présente invention par rapport à la composition élastomère sans copolymère.
o **Caractérisation du volume** :
   ▪ Essai rhéométrique selon la norme NF T43015 à 160 °C pendant 100 min pour chaque mélange à l'état cru afin d'évaluer l'impact de l'ajout du copolymère sur la cinétique de réticulation du matériau
   ▪ Essai de traction unidirectionnelle selon la norme NF ISO 37 sur chaque mélange à l'état réticulé afin d'évaluer l'impact du copolymère sur les propriétés mécaniques de la composition élastomère. On évalue, notamment la contrainte à la rupture, l'allongement maximal à la rupture, les contraintes pour 50, 100, 200, 300% d'allongement et on les compare avec les caractéristiques des compositions élastomères réticulées sans copolymère (témoin C1).

A la fin de cette caractérisation sommaire, les mélanges sont retenus pour l'exemple 3 (avec au moins 2 copolymères différents) sur la base des critères suivants par ordre de priorité :
▪ Energie de surface la plus élevée possible et/ou possédant une forte contribution polaire (qu'on suppose favorable vis-à-vis de la résine polaire), confirmant la présence de fonctions chimiques « polaires ».
▪ Propriétés mécaniques et rhéométriques les plus proches possibles de celles de la composition élastomère sans copolymère amphiphile

**Tableau 3 : résultats des tests mécaniques sur les compositions élastomères vulcanisées**

| **Exemple** | **C1** | **Ex1** | **Ex2** | **Ex 3** | **C2** | **C3** | **C4** |
|---|---|---|---|---|---|---|---|
| Contrainte à la rupture (MPa) | 1 | 0,7 | 0,7 | 0,8 | 0,95 | 0,8 | 0,5 |
| Allongement à la rupture (%) | 1 | 1,07 | 1,39 | 1,13 | 1,28 | 1,50 | 1,58 |
| Contrainte à 50% d'allongement (MPa) | 1 | 0,89 | 0,78 | 0,92 | 0,86 | 0,78 | 0,82 |

| **Exemple** | **C9** | **C10** | **Ex4** | **EX5** | **Ex 6** | | |
|---|---|---|---|---|---|---|---|
| Contrainte à la rupture (MPa) | 0,9 | 0,8 | 0,9 | 0,87 | 0,65 | | |
| Allongement à la rupture (%) | 0,99 | 0,98 | 1,13 | 1,26 | 0,96 | | |
| Contrainte à 50% d'allongement (MPa) | 1,07 | 1,07 | 0,96 | 1 | 1,21 | | |

A l'issue des différents tests réalisés, quatre compositions élastomères selon la présente invention ont été sélectionnées avec les copolymères suivants:
- PE/POE à 5% en masse (C2) pour ses propriétés mécaniques proches de la référence
- PE/POE à 14% en masse (C4) pour son énergie de surface totale supérieure de 17 % par rapport à la référence avec une part conséquente de partie polaire (+ 30% par rapport à la référence).
- PE/anhydride maléique à 5% en masse (Ex 4) avec de bonnes propriétés mécaniques et une énergie de surface supérieure à la référence avec une partie polaire identique à cette référence (+0,40%).
- Polybutadiène / anhydride maléique (8%) à 5% en masse (Ex1) avec des propriétés mécaniques et une énergie de surface acceptables (augmentation de l'énergie totale de 23 %).

Le copolymère Polybutadiène /anhydride maléique (20%) à 10 % en masse (Ex 6) n'a pas été retenu car il n'est pas possible de retirer les films et les tissus de mise en œuvre de cette composition élastomère fonctionnalisée. Ces compositions élastomères réticulées semblent donc présenter un pouvoir collant et donc d'adhésion supérieur à celui de toutes les autres compositions élastomères réticulées.

### Exemple 3 : évaluation de l'assemblage élastomère/composite

L'assemblage de l'élastomère avec le composite est réalisé à partir de la composition élastomère de la présente invention (B) et du composite décrit dans la présente invention (A). La liaison entre ces deux matériaux est testée avec des éprouvettes de pelage 90° selon la norme ISO 4578.

Les compositions élastomère vulcanisées ont été fabriquées comme indiqué dans l'exemple 2 avec le copolymère dans les proportions requises (5 % ou 14% en masse par rapport à la masse totale de la composition) selon les types de copolymères sélectionnés. Une fois les compositions élastomères réticulées, elles ont été mise en contact avec un composite préimprégné résine époxy/fibres de carbone. L'assemblage a ensuite été réticulé 22 heures entre 70 °C et 90 °C.

Les résultats sont rassemblés dans les tableaux 4 et 5 suivants et comparés aux résultats obtenus avec un composite de référence obtenu par collage avec un primaire d'adhérence des compositions élastomères réticulées ne contenant pas de copolymère.

**Tableau 4 : résultats de résistance au pelage à 90°**

| **Exemples** | **Copolymère testé** | **Résistance au Pelage normé par rapport à la référence** |
|---|---|---|
| C1 | Aucun : Composition élastomère de référence + primaire d'adhérence | 1 |
| Ex 1 | Polybutadiène / anhydride maléique (8%) à 5% en masse : composite selon la présente invention | 1 |
| C2 | PE/POE à 5% en masse: exemple comparatif | 0,17 |
| C4 | PE/POE à 14% en masse: exemple comparatif | 0,07 |
| Ex 4 | PE/anhydride maléique (3-3,5%) à 5% en masse: composite selon la présente invention | 0,6 |

**Tableau 5 : faciès de rupture du pelage à 90 °**

| **Exemple** | **Cohésif composition élastomère** | **Cohésif superficiel composition élastomère** / **composite** | **Cohésif superficiel composite/ composition élastomère** | **Adhésif** |
|---|---|---|---|---|
| C1 | 100% | 0% | 0% | 0% |
| Ex 1 | 88% | 12% | 0% | 0% |
| C2 | 0% | 0% | 0% | 100% |
| C4 | 0% | 0% | 0% | 100% |
| Ex 4 | 14% | 26% | 60% | 0% |

Les résultats montrent que :
- les éprouvettes réalisées avec la composition élastomère fonctionnalisée avec le copolymère Polybutadiène / anhydride maléique (8%) sont intéressantes dans le cadre de la présente invention car les valeurs de pelage sont équivalentes à celle du composé de référence avec agent adhérisant avec des faciès majoritairement cohésifs.
- les éprouvettes réalisées avec la composition élastomère fonctionnalisée avec le copolymère PE/anhydride maléique (3-3,5%) présentent de bonnes valeurs de résistance au pelage (Rp) avec un faciès de rupture plutôt cohésif.
- les éprouvettes réalisées avec la composition élastomère avec le copolymère PE/POE ont des valeurs de pelage faibles et un faciès de rupture adhésif. Ce faciès traduit une absence d'adhérence entre la composition élastomère et le composite. Ceci n'est pas intéressant dans le cadre de la présente invention.

Dans le cadre de la présente invention, seuls sont retenus les copolymères Polybutadiène / anhydride maléique (8%) et PE/anhydride maléique (3-3,5%).

Les groupements réactifs les plus intéressants dans les copolymères selon la présente invention sont donc les groupements anhydride maléique.

Ainsi, les informations que l'on peut déduire au vu des exemples sont les suivantes :
- la migration de surface est plus facilement mise en évidence par mesure d'énergie de surface pour les copolymères à blocs que pour les copolymères statistiques (densité de fonctions polaires en surface plus importante pour le copolymère à bloc que pour copolymères statistiques)
- Les copolymères ont la capacité de modifier la chimie de surface de façon à la rendre auto-adhérente.
- les fonctions chimiques et leurs interactions qui peuvent être chimiques ou physico-chimiques à la fois avec la matrice élastomère et la résine du composite jouent un rôle important dans le processus d'auto-adhésion. En effet, les fonctions chimiques capables de réagir avec la résine époxy possèdent la capacité d'établir des liaisons robustes (faciès de rupture cohésifs et des valeurs à rupture plus élevées) contrairement aux liaisons crées par les copolymères à interactions physiques.

Les fonctions chimiques les plus intéressantes sont les fonctions anhydrides maléiques. De même pour des raisons de compatibilité avec l'élastomère EPDM, la partie apolaire du copolymère doit être un polymère hydrocarboné saturé ou insaturé en C2-C4 et en particulier le polybutadiène ou le polyéthylène.
- Une teneur en copolymère de 5 % en masse par rapport à la masse totale de la composition semble la plus intéressante pour garder de bonnes propriétés mécaniques et ainsi éviter la plastification trop importante de la composition élastomère réticulée.

Ainsi les copolymères utilisables dans le cadre de la présente invention sont des copolymères amphiphiles statistiques d'un polyalkylène dont le groupe alkyle est en C2-C4 avec un polyalkylène dont le groupe alkyle est en C2-C4 fonctionnalisé par un groupement fonctionnel polaire comprenant un groupement anhydride maléique.

## Revendications

1. Composition élastomère réticulable comprenant un mélange
- (a) d'une composition élastomère à base d'un élastomère terpolymère éthylène-propylène-diène et
- (b) entre 2 et 14% en masse par rapport à la masse totale de la composition d'un copolymère amphiphile statistique [P,A] présentant une partie polaire (P) et une partie apolaire (A) et obtenu par réaction de greffage de l'anhydride maléique sur un polymère hydrocarboné saturé ou insaturé en C2-C4, le polymère hydrocarboné saturé ou insaturé en C2-C4 étant choisi parmi le polyéthylène, le polyéthylène-polypropylène et le polybutadiène et la teneur en anhydride maléique du copolymère étant comprise entre 2 et 40 % en masse, par rapport à la masse totale du copolymère.

2. Composition selon la revendication 1 **caractérisée en ce que** le polymère hydrocarboné saturé ou insaturé en C₂-C₄ est du polybutadiène.

3. Composition selon l'une quelconque des revendications 1 ou 2 **caractérisée en ce que** l'élastomère terpolymère (a) comprend par rapport à la masse totale du terpolymère entre 60 et 80 % en masse d'éthylène, entre 2 et 12 % en masse du diène, le reste étant constitué par du propylène.

4. Composition selon l'une quelconque des revendications 1 à 3 **caractérisée en ce que** le diène est l'éthylène norbornène.

5. Composition selon l'une quelconque des revendications 1 à 4 **caractérisée en ce qu'**elle comprend une charge, éventuellement un plastifiant, et un système de réticulation, avantageusement constitué par des peroxydes.

6. Composition selon l'une quelconque des revendications 1 à 5 **caractérisée en ce qu'**elle comprend par rapport à la masse totale de la composition entre 3 et 10 % en masse du copolymère amphiphile (b), avantageusement 5% en masse.

7. Procédé de préparation de la composition selon l'une quelconque des revendications 1 à 6 **caractérisé en ce qu'**il comprend l'étape d'incorporation du copolymère amphiphile (b) dans la composition élastomère (a), avantageusement avec un mélangeur interne ou ouvert, plus avantageusement avec un mélangeur ouvert.

8. Composition élastomère réticulée obtenue par réticulation, avantageusement à l'aide de peroxydes, de la composition selon l'une quelconque des revendications 1 à 6.

9. Procédé de fabrication de la composition réticulée selon la revendication 8 **caractérisé en ce qu'**il comprend l'étape de réticulation de la composition selon l'une quelconque des revendications 1 à 6 à l'aide d'un système de réticulation, avantageusement à une température comprise entre 110 et 160 °C, encore plus avantageusement sous pression et sous vide.

10. Procédé selon la revendication 9 **caractérisé en ce qu'**il comprend une étape préalable à l'étape de réticulation de mise en contact de la composition selon l'une quelconque des revendications 1 à 6 avec des tissus ou films de mise en œuvre polaires ou apolaires, avantageusement polaires.

11. Utilisation de la composition élastomère réticulée selon la revendication 8 en tant que protection thermique et/ou étanchéité interne d'un matériau composite et/ou pour accommoder les déformations mécaniques de ce matériau composite.

12. Assemblage comprenant
- (A) une structure en matériau composite
- (B) une couche de revêtement en composition élastomère selon la revendication 8.

13. Assemblage selon la revendication 12 **caractérisé en ce que** la matrice du matériau composite (A) est en résine époxy, avantageusement en éther diglycidyle de bisphénol A, et les renforts sont en fibre de carbone.

14. Assemblage selon l'une quelconque des revendications 12 ou 13 **caractérisé en ce qu'**il ne comprend pas d'adhésif ou de primaire d'adhérence entre la structure en matériau composite (A) et la couche de revêtement en composition élastomère réticulée (B).

15. Procédé de fabrication de l'assemblage selon l'une quelconque des revendications de 12 à 14 **caractérisé en ce qu'**il comprend les étapes successives suivantes :
a) préparation de la composition élastomère réticulable selon l'une quelconque des revendications 1 à 6, avantageusement à l'aide du procédé selon la revendication 7;
b) réticulation de la composition obtenue à l'étape a), avantageusement à l'aide du procédé selon la revendication 9 ou 10 ;
c) mise en contact d'un matériau composite à l'état non réticulé avec la composition élastomère réticulée obtenue à l'étape b) ;
d) réticulation de la résine du matériau composite à l'aide d'un cycle thermique approprié afin de permettre l'adhésion spontanée entre la composition élastomère réticulée et la résine du matériau composite, avantageusement à une température comprise entre 70 et 130 °C.

16. Utilisation de l'assemblage selon l'une quelconque des revendications 12 à 14 dans les domaines de l'aéronautique ou de l'aérospatial avantageusement dans les systèmes de propulsion.

## Patentansprüche

1. Vernetzbare Elastomerzusammensetzung, umfassend eine Mischung aus
- (a) einer Elastomerzusammensetzung auf Basis eines Ethylen-Propylen-Dien-Terpolymer-Elastomers und
- (b) zwischen 2 und 14 % Massenanteil, bezogen auf die Gesamtmasse der Zusammensetzung, eines statistischen amphiphilen Copolymers [P, A] mit einem polaren Teil (P) und einem apolaren Teil (A), erhalten durch Pfropfreaktion von Maleinsäureanhydrid auf ein gesättigtes oder ungesättigtes C2-C4-Kohlenwasserstoffpolymer, wobei das gesättigte oder ungesättigte C2-C4-Kohlenwasserstoffpolymer ausgewählt ist aus Polyethylen, Polyethylen-Polypropylen und Polybutadien und der Maleinsäureanhydridgehalt des Copolymers zwischen 2 und 40 % Massenanteil, bezogen auf die Gesamtmasse des Copolymers, liegt.

2. Zusammensetzung nach Anspruch 1, **dadurch gekennzeichnet, dass** es sich bei dem gesättigten oder ungesättigten C₂-C₄-Kohlenwasserstoffpolymer um Polybutadien handelt.

3. Zusammensetzung nach einem der Ansprüche 1 oder 2, **dadurch gekennzeichnet, dass** das Terpolymer-Elastomer (a), bezogen auf die Gesamtmasse des Terpolymers, zwischen 60 und 80 % Massenanteil Ethylen und zwischen 2 und 12 % Massenanteil Dien umfasst, wobei der Rest aus Propylen besteht.

4. Zusammensetzung nach einem der Ansprüche 1 bis 3, **dadurch gekennzeichnet, dass** es sich bei dem Dien um Ethylen-Norbornen handelt.

5. Zusammensetzung nach einem der Ansprüche 1 bis 4, **dadurch gekennzeichnet, dass** sie einen Füllstoff, gegebenenfalls einen Weichmacher, und ein Vernetzungssystem, das vorteilhafterweise aus Peroxiden besteht, umfasst.

6. Zusammensetzung nach einem der Ansprüche 1 bis 5, **dadurch gekennzeichnet, dass** sie, bezogen auf die Gesamtmasse der Zusammensetzung, zwischen 3 und 10 % Massenanteil des amphiphilen Copolymers (b) umfasst, vorteilhafterweise 5 % Massenanteil.

7. Verfahren zur Herstellung der Zusammensetzung nach einem der Ansprüche 1 bis 6, **dadurch gekennzeichnet, dass** es den Schritt der Einarbeitung des amphiphilen Copolymers (b) in die Elastomerzusammensetzung (a) umfasst, vorteilhafterweise mit einem internen oder offenen Mischer, noch vorteilhafter mit einem offenen Mischer.

8. Vernetzte Elastomerzusammensetzung, erhalten durch Vernetzen, vorteilhafterweise mit Hilfe von Peroxiden, der Zusammensetzung nach einem der Ansprüche 1 bis 6.

9. Verfahren zur Herstellung der vernetzten Zusammensetzung nach Anspruch 8, **dadurch gekennzeichnet, dass** es den Schritt des Vernetzens der Zusammensetzung nach einem der Ansprüche 1 bis 6 unter Verwendung eines Vernetzungssystems, vorteilhafterweise bei einer Temperatur zwischen 110 und 160 °C, noch vorteilhafter unter Druck und unter Vakuum, umfasst.

10. Verfahren nach Anspruch 9, **dadurch gekennzeichnet, dass** es einen Schritt vor dem Schritt des Vernetzens umfasst, bei dem die Zusammensetzung nach einem der Ansprüche 1 bis 6 mit polaren oder apolaren, vorteilhafterweise polaren, Geweben oder Filmen für die Umsetzung in Kontakt gebracht wird.

11. Verwendung der vernetzten Elastomerzusammensetzung nach Anspruch 8 als Wärmeschutz und/oder interne Abdichtung eines Verbundmaterials und/oder zur Aufnahme von mechanischen Verformungen dieses Verbundmaterials.

12. Anordnung, umfassend
- (A) eine Verbundmaterialstruktur
- (B) eine Überzugsschicht aus Elastomerzusammensetzung nach Anspruch 8.

13. Anordnung nach Anspruch 12, **dadurch gekennzeichnet, dass** die Matrix des Verbundmaterials (A) aus Epoxidharz, vorteilhafterweise aus Bisphenol-A-Diglycidylether, und die Verstärkungen aus Kohlefaser bestehen.

14. Anordnung nach einem der Ansprüche 12 oder 13, **dadurch gekennzeichnet, dass** sie keinen Klebstoff oder Haftprimer zwischen der Verbundmaterialstruktur (A) und der Überzugsschicht aus vernetzter Elastomerzusammensetzung (B) umfasst.

15. Verfahren zur Herstellung der Anordnung nach einem der Ansprüche 12 bis 14, **dadurch gekennzeichnet, dass** es die folgenden aufeinanderfolgenden Schritte umfasst:
a) Herstellen der vernetzbaren Elastomerzusammensetzung nach einem der Ansprüche 1 bis 6, vorteilhafterweise mittels des Verfahrens nach Anspruch 7;
b) Vernetzen der in Schritt a) erhaltenen Zusammensetzung, vorteilhafterweise mittels des Verfahrens nach Anspruch 9 oder 10;
c) Inkontaktbringen eines Verbundmaterials im unvernetzten Zustand mit der in Schritt b) erhaltenen vernetzten Elastomerzusammensetzung;
d) Vernetzen des Harzes des Verbundmaterials mittels eines geeigneten thermischen Zyklus, um eine spontane Haftung zwischen der vernetzten Elastomerzusammensetzung und dem Harz des Verbundmaterials zu ermöglichen, vorteilhafterweise bei einer Temperatur zwischen 70 und 130 °C.

16. Verwendung der Anordnung nach einem der Ansprüche 12 bis 14 im Bereich der Luft- oder Raumfahrt, vorteilhafterweise in Antriebssystemen.

## Claims

1. A crosslinkable elastomer composition comprising a mixture
- (a) of an elastomer composition based on an ethylene-propylene-diene terpolymer elastomer and
- (b) between 2% and 14% by weight, relative to the total weight of the composition, of a random amphiphilic copolymer [P,N] having a polar part (P) and a nonpolar part (N) and obtained by a grafting reaction of a maleic anhydride group on a saturated or unsaturated hydrocarbon-based C₂-C₄ polymer, the saturated or unsaturated hydrocarbon-based C₂-C₄ polymer being chosen from polyethylene, polyethylene-polypropylene and polybutadiene and the maleic anhydride content of the copolymer being between 2% and 40% by weigh, based on the total weight of the copolymer.

2. The composition as claimed in claim 1, wherein the saturated or unsaturated hydrocarbon-based C₂-C₄ polymer is polybutadiene.

3. The composition as claimed in any one of claim 1 or 2, wherein the terpolymer elastomer (a) comprises, relative to the total weight of the terpolymer, between 60% and 80% by weight of ethylene, between 2% and 12% by weight of the diene, the rest consisting of propylene.

4. The composition as claimed in any one of claims 1 to 3, **characterized in that** the diene is ethylene norbornene.

5. The composition as claimed in any one of claims 1 to 4, **characterized in that** it comprises a filler, optionally a plasticizer, and a crosslinking system, advantageously consisting of peroxides.

6. The composition as claimed in any one of claims 1 to 5, **characterized in that** it comprises, relative to the total weight of the composition, between 3% and 10% by weight of the amphiphilic copolymer (b), advantageously 5% by weight.

7. A process for preparing the composition as claimed in any one of claims 1 to 6, **characterized in that** it comprises the step of incorporating the amphiphilic copolymer (b) into the elastomer composition (a), advantageously with an internal or open mixer, more advantageously with an open mixer.

8. A crosslinked elastomer composition obtained by crosslinking, advantageously by means of peroxides, of the composition as claimed in any one of claims 1 to 6.

9. A process for producing the crosslinked composition as claimed in claim 8, **characterized in that** it comprises the step of crosslinking the composition as claimed in any one of claims 1 to 6 by means of a crosslinking system, advantageously at a temperature of between 110 and 160°C, even more advantageously under pressure and under vacuum.

10. The process as claimed in claim 9, **characterized in that** it comprises a step, prior to the crosslinking step, of bringing the composition as claimed in any one of claims 1 to 6 into contact with polar or nonpolar, advantageously polar, processing fabrics or films.

11. The use of the crosslinked elastomer composition as claimed in claim 8, as thermal protection and/or internal sealing of a composite material and/or for accommodating the mechanical strains of this composite material.

12. An assembly comprising:
- (A) a structure made of composite material,
- (B) a coating layer of elastomer composition as claimed in claim 8.

13. The assembly as claimed in claim 12, **characterized in that** the matrix of the composite material (A) is made of epoxy resin, advantageously made of bisphenol A diglycidyl ether, and the reinforcements are made of carbon fiber.

14. The assembly as claimed in either one of claims 12 and 13, **characterized in that** it does not comprise adhesive or adhesive primer between the structure made of composite material (A) and the coating layer of crosslinked elastomer composition (B).

15. A process for producing the assembly as claimed in any one of claims 12 to 14, **characterized in that** it comprises the following successive steps:
a) preparing the crosslinkable elastomer composition as claimed in any one of claims 1 to 6, advantageously by means of the process as claimed in claim 7;
b) crosslinking the composition obtained in step a), advantageously by means of the process as claimed in claim 9 or 10;
c) bringing a composite material in the non-crosslinked state into contact with the crosslinked elastomer composition obtained in step b);
d) crosslinking the resin of the composite material by means of a suitable thermal cycle in order to allow spontaneous adhesion between the crosslinked elastomer composition and the resin of the composite material, advantageously at a temperature of between 70 and 130°C.

16. The use of the assembly as claimed in any one of claims 12 to 14, in the aeronautics or aerospace fields, advantageously in propulsion systems.
